# EUROPEAN PATENT APPLICATION

(11) **EP 4 783 103 A1**
(43) Date of publication of application: **29.07.2026**
(21) Application number: 23953135.3
(22) Date of filing: 19.10.2023
(51) Int. Cl.: G06Q 50/10

(54) **ARTICLE PROVISION SYSTEM, PROGRAM, AND ARTICLE PROVISION DEVICE**

(30) Priority: 21.09.2023 JP 2023156564
(71) Applicant: Bandai Co., Ltd., Tokyo 111-8081 (JP)
(72) Inventor: OSUKI, Junichi, Tokyo 108-0073 (JP); SAKASAI, Satoshi, Tokyo 108-0073 (JP); AKKA, Yukari, Tokyo 108-0073 (JP); INOUE, Ryo, Tokyo 108-0073 (JP); NAKANO, Hideaki, Sapporo-shi, Hokkaido 060-0001 (JP); FUJIWARA, Shigeki, Sapporo-shi, Hokkaido 060-0001 (JP)
(74) Representative: Studio Torta S.p.A.
(86) International application number: PCT/JP2023/037913
(87) International publication number: WO 2025/062660

(57) **Abstract**

Means to solve the problem: An item providing system includes a display control means which displays a first object image associated with each series to which items belong, and a lottery means which performs a lottery by a first lottery method or a second lottery method which is set for the series associated with the first object image that was selected. The display control means displays, on a condition that the first object image of the series to which the first lottery method is set was selected, a first lottery screen on which a number of draws can be designated, and displays, on a condition that the first object image of the series to which the second lottery method is set was selected, a second lottery screen on which any of a plurality of second object images, which are each linked with an item group into which the items have been grouped, can be selected.

## Description

### BACKGROUND

### 1. TECHNICAL FIELD

The present invention relates to an item providing system, program, and item providing apparatus.

### 2. RELATED ART

There is a technology in which a lottery is performed for a user connected via a network, and electronic data corresponding to the lottery result is transmitted (Patent Document 1).

### Related Art Documents

### Patent Document

Patent Document 1: Japanese Patent Application Publication No. 2005-070937

### Summary of the invention

### Problem to be solved by the invention

However, in the Patent Document 1, an item can only be provided by one lottery method.

Thus, the problem to be solved by the present invention is to provide a technology in which an item is provided by any one of a plurality of lottery methods.

### SUMMARY

An aspect of the present invention is an item providing system, including a display control means which displays a first object image associated with each series to which items belong; and a lottery means which performs a lottery by a first lottery method or a second lottery method which is set for the series associated with the first object image that was selected, wherein the display control means displays, on a condition that the first object image of the series to which the first lottery method is set was selected, a first lottery screen on which a number of draws can be designated, and displays, on a condition that the first object image of the series to which the second lottery method is set was selected, a second lottery screen on which any of a plurality of second object images, which are each linked with an item group into which the items have been grouped, can be selected.

An aspect of the present invention is a program causing a computer to function as a display control means which displays a first object image associated with each series to which items belong; and a lottery means which performs a lottery by a first lottery method or a second lottery method which is set for the series associated with the first object image that was selected, wherein the display control means displays, on a condition that the first object image of the series to which the first lottery method is set was selected, a first lottery screen on which a number of draws can be designated, and displays, on a condition that the first object image of the series to which the second lottery method is set was selected, a second lottery screen on which any of a plurality of second object images, which are each linked with an item group into which the items have been grouped, can be selected.

An aspect of the present invention is an item providing apparatus, including a display control means which displays a first object image associated with each series to which items belong; and a lottery means which performs a lottery by a first lottery method or a second lottery method which is set for the series associated with the first object image that was selected, wherein the display control means displays, on a condition that the first object image of the series to which the first lottery method is set was selected, a first lottery screen on which a number of draws can be designated, and displays, on a condition that the first object image of the series to which the second lottery method is set was selected, a second lottery screen on which any of a plurality of second object images, which are each linked with an item group into which the items have been grouped, can be selected.

### Effect of the invention

According to the present application, a user can select a lottery method, which makes it possible to increase amusement in providing an item.

### BRIEF DESCRIPTION OF THE DRAWINGS

FIG. 1 is a diagram illustrating an overall configuration of an item providing system of the present embodiment.
FIG. 2 is a block diagram illustrating an example of a provision server 100.
FIG. 3 is an example of series data.
FIG. 4 is an example of first item data.
FIG. 5 is an example of second item data.
FIG. 6 is an example for describing a series list screen.
FIG. 7 is an example for describing a probability lottery screen.
FIG. 8 is an example for describing a lottery box selection screen.
FIG. 9 is an example for describing a provided item information screen.
FIG. 10 is an example for describing a lottery ticket selection screen.
FIG. 11 is an example for describing a payment screen.
FIG. 12 is an example for describing a lottery result screen.
FIG. 13 is a block diagram illustrating an example of a user terminal.
FIG. 14 is a sequence diagram of a system of the present invention.
FIG. 15 is a flow diagram for describing operations of the provision server 100.
FIG. 16 is a flow diagram for describing operations of the user terminal.
FIG. 17 is a block diagram illustrating an example of the provision server 100.

### DESCRIPTION OF EXEMPLARY EMBODIMENTS

### First embodiment

### Summary of system

A first embodiment of the present invention will be described.

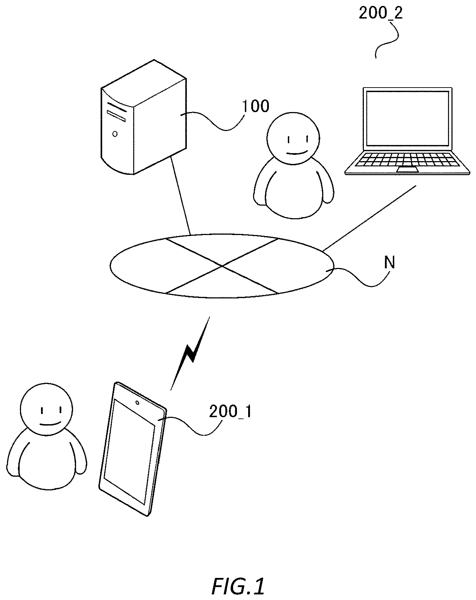

FIG. 1 is a diagram illustrating an overall configuration of an item providing system 1 of the present invention. An item providing system 1 has a provision server 100 (item providing apparatus) and a user terminal 200. The provision server 100 and the user terminal 200 can be connected via a communication line N. The communication line N means a communication path through which data communication is possible. That is, the communication line N includes a dedicated line (dedicated cable) for direct connection, a LAN using Ethernet (registered trademark) or the like, as well as a communication network such as a telephone network, cable network, and the Internet, and the communication method may be wired or wireless.

When an item is provided according to the present invention, an item won by a lottery from a set of prizes is provided to a user. This lottery may have losers to which the item is not provided, but in the description below, it is assumed that the lottery has no losers, and any one of the prizes is provided. The items provided as the prizes (hereinafter referred to as provided items) may be electronic data such as images and music, and may be physical items such as toys, stationery, models, clothing, and household items. In addition, the physical items may be a combination of different types of items such as toys, stationery, models, clothing, and household items. In the description below, a case where a physical item is provided by delivery will be described.

In addition, the provided items may be different types of items as long as they are of the same series (title). For example, the provided items may be provided in different forms, such as electronic data and physical items, as long as they are works of animation, film, manga, video games, or the like having the same world view, or they are items grouped in advance as a series based on their similarities. In the description below, a case where the provided items are multiple types of physical items will be described.

In addition, the lottery of the present invention is performed according to a first lottery method or a second lottery method. The lottery method that is used is predetermined for each series. In the description below, the first lottery method is described as a probability lottery, and the second lottery method is described as a lottery box lottery.

The probability lottery is a lottery that is executed by the user designating a number of draws. The same number of provided items as the designated number of draws is provided to the user.

The lottery box lottery is a lottery that is executed by the user selecting any one of displayed lottery boxes and a lottery ticket inside the lottery box. A provided item is linked to the lottery ticket, and the provided item linked to the selected lottery ticket is provided to the user.

That is, the probability lottery is a lottery method in which a lottery ticket is drawn from one lottery box that is not visualized, and the lottery box lottery is a lottery method in which a lottery ticket is drawn from any of a plurality of lottery boxes that are visualized.

The present invention is an item providing system in which the provided item won by the lottery method that is the probability lottery or the lottery box lottery is provided to the user. The present invention will be described in detail below.

### <Provision server 100>

The provision server 100 is a server for providing (selling) an item to a user, and is provided on a sales company side. The provision server 100 is a server provided on a network, and includes a virtual server configured by a cloud-based platform. The provision server 100 provides the user with an item according to a lottery result.

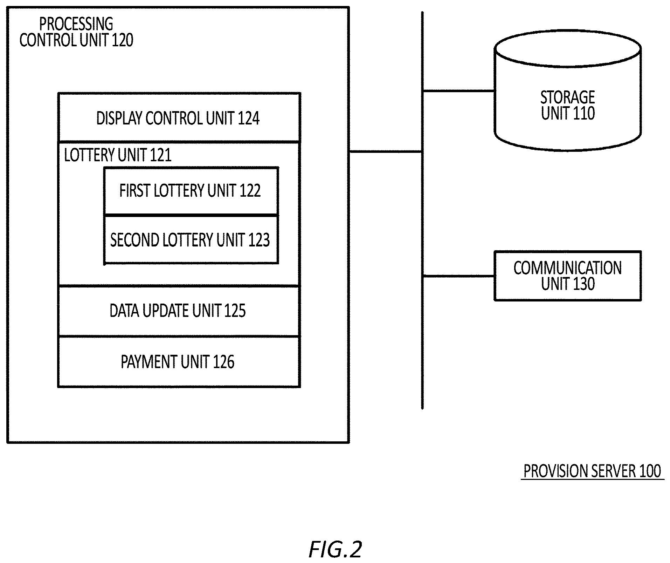

FIG. 2 is a block diagram of the provision server 100. As illustrated in FIG. 2, the provision server 100 includes a storage unit 110, a processing control unit 120, and a communication unit 130.

The storage unit 110 is stored with a system program that is a program for realizing basic functions of the provision server 100 as a computer. Furthermore, the storage unit 110 is stored with a provided item database 111 and screen format data 112.

The provided item database 111 includes series data 113, first item data 114, second item data 115, and lottery probability information 116.

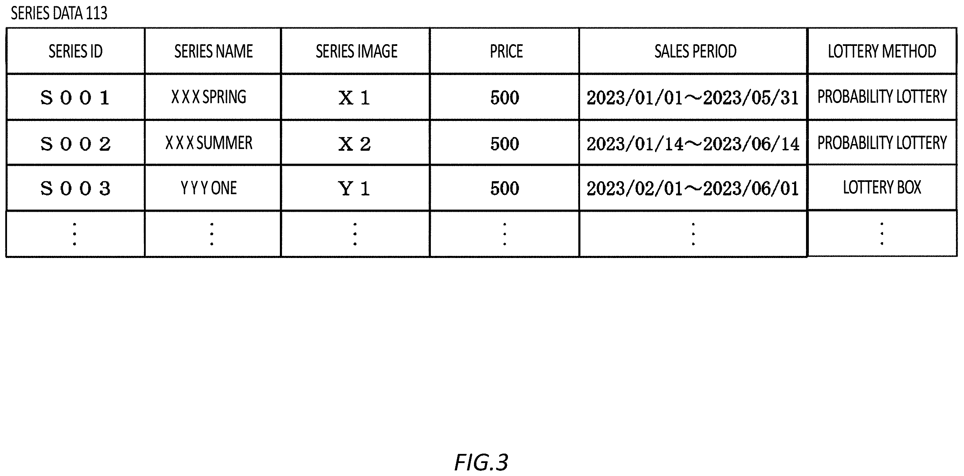

The series data 113 is series information of the provided items. As illustrated in FIG. 3, in the series data 113, a series ID, series name, series image, price, sales period, and lottery method are associated with one another. The series ID is identification information for uniquely identifying a series. The series name is a name given to the series. The series image is stored with an image that allows the provided items belonging to the series to be visually understandable. The price is a price for one draw of the series. The sales period is a period during which the series is sold. The lottery method is information indicating whether the lottery for the provided items of the series is performed by the probability lottery method or the lottery box lottery method.

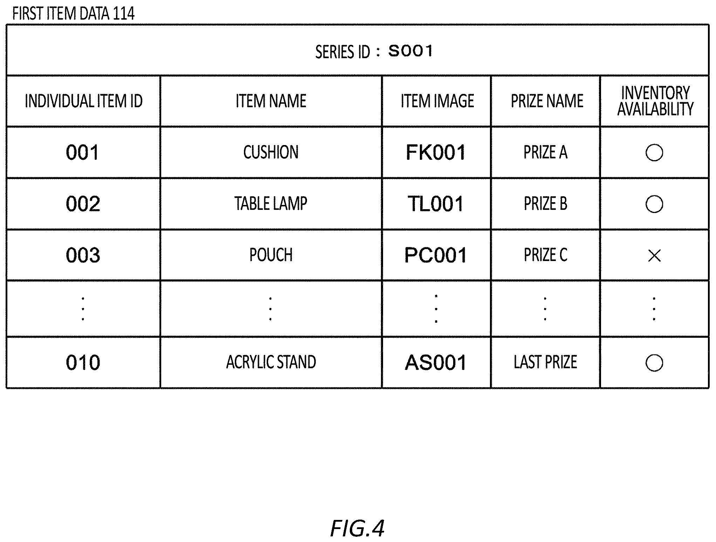

First item data 114 holds information of each provided item of the series to which the probability lottery method is allocated. FIG. 4 illustrates an example of the first item data 114. The first item data 114 for each series, in which an individual item ID, item name, item image, prize name, and inventory availability information are associated with one another, configures one record. The individual item ID is identification information for uniquely identifying a provided item. The item name is a name given to the provided item. The prize name is a name of a prize allocated to each item. The inventory availability information indicates whether or not there is inventory of the item, and is marked with a circle when there is inventory (not provided), and is marked with a cross when there is no inventory (provided). It should be noted that the item data 114 may be further associated with information such as a description of the item that is text information of information relating to the provided item.

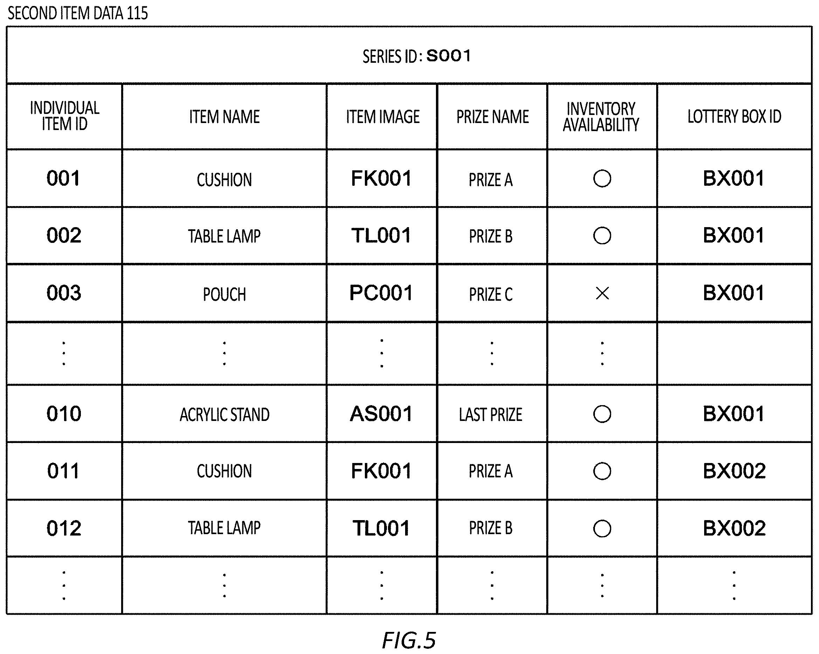

Second item data 115 holds information of each provided item of the series to which the lottery box lottery method is allocated. FIG. 5 illustrates an example of the second item data 115. In the second item data 115 for each series, an individual item ID, item name, item image, prize name, inventory availability information, and lottery box ID are associated with one another. The individual item ID, item name, item image, prize name, and inventory availability information are the same as those of the first item data 114, so a detailed description thereof is omitted. The lottery box ID is identification information for uniquely identifying a lottery box to which the provided item is allocated as a winning prize. It should be noted that, similarly to the first item data, the second item data 115 may be associated with information such as a description of the item.

Lottery probability information 116 is information on a winning probability of each prize for each series, and is associated with the prize name and the winning probability. It should be noted that in the description below, an example in which the winning probability of each prize is pre-stored for all of the inventory is used, but a configuration in which the winning probability is calculated and updated each time a change in inventory occurs due to a lottery, thereby maintaining the current winning probability, may also be used.

The screen format data 112 defines a display format that is displayed on a display screen of the user terminal 200. For example, a plurality of screen formats are prepared for the display screen of the user terminal 200, such as a probability lottery screen, lottery box lottery screen, payment screen, and lottery result screen.

The processing control unit 120 integrally controls operations of the provision server 100 based on the program stored in the storage unit 110. The processing control unit 120 includes a lottery unit 121 having a first lottery unit 122 and a second lottery unit 123, a display control unit 124, a data update unit 125, and a payment unit 126.

The lottery unit 121 judges whether a lottery for a series selected by the user will be performed by the probability lottery or the lottery box lottery. The lottery unit 121 has the first lottery unit 122 that executes the lottery by the probability lottery and the second lottery unit 123 that executes the lottery by the lottery box lottery.

The first lottery unit 122 performs the lottery for a provided item (individual item ID of the provided item) with inventory by using a random function. The first lottery unit 122 does not perform the lottery by using the random function for a last one prize that is provided as a last item for the lottery of the series, and determines that the last one prize has been won when the inventory of the series only has the item that is the last one prize.

The second lottery unit 123 uses a random function to perform a lottery for a lottery ticket ID that is linked to an object image of a lottery ticket displayed on a lottery ticket selection screen described below, and outputs the lottery ticket ID. At this time, the second lottery unit 123 compares the number of draws and a number of items with inventory, and when they are not the same, performs the lottery without including the lottery ticket ID of the last one prize. When the number of draws by the user and the number of items with inventory are the same, the second lottery unit 123 outputs the lottery ticket ID including the lottery ticket ID of the item that is the last one prize.

The display control unit 124 uses the provided item database 111 and the screen format data 112 to generate data of a browser-based display screen, and transmits it to the user terminal 200 via the communication unit 130. The display screens generated by the display control unit 124 are a series list screen 60, a probability lottery screen 70, a lottery box lottery screen 80 (lottery box selection screen 81, provided item information screen 82, lottery ticket selection screen 83), a payment screen 84, and a lottery result screen 85.

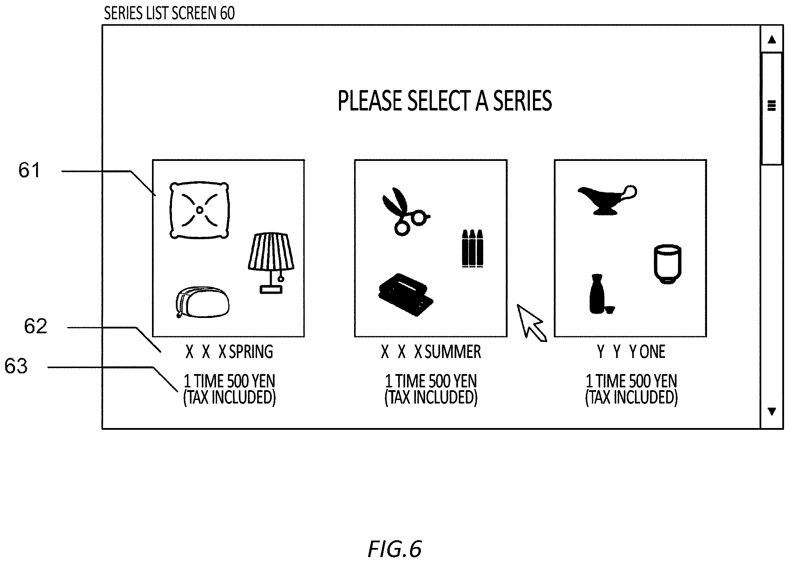

The series list screen 60 is a screen on which a list of series for sale are displayed. FIG. 6 is an example of the series list screen 60. The display control unit 124 reads the series image, price, and series name from the series data 113, and generates the series list screen 60 according to the screen format data 112. As illustrated in FIG. 6, a series image 61, series name 62, and price 63 are displayed for each series on the series list screen 60. The user selects the series image 61 of a desired series. In addition, when reading the series data 113 during generation of the series list screen 60, the display control unit 124 compares the sales period of the series data 113 and the current date and time, and when the current date and time falls within the sales period, reads the series image, price, and series name.

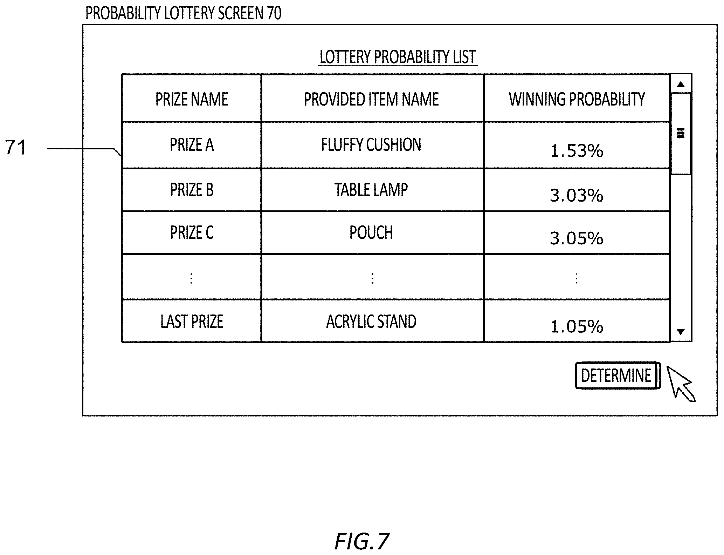

The probability lottery screen 70 is a screen which is displayed when the lottery method set for the series selected on the series list screen 60 is the probability lottery. FIG. 7 illustrates an example of the probability lottery screen 70. As illustrated in FIG. 7, probability lottery information 71 is displayed on the probability lottery screen 70. The display control unit 124 generates the probability lottery information 71 by using the item name and prize name of the first item data 114 of the series ID associated with the series image 61 selected by the user, and the lottery probability information 116.

The lottery box lottery screen 80 is a screen which is displayed when the lottery method set for the series selected on the series list screen 60 is the lottery box lottery method. The lottery box lottery screen 80 has the lottery box selection screen 81, the provided item information screen 82, and the lottery ticket selection screen 83.

The lottery box selection screen 81 is a screen for displaying a plurality of object images of lottery boxes, and for the user to select a displayed lottery box. A screen format of the lottery box selection screen 81 is preset for each series. The screen format of the lottery box selection screen 81 is called based on the series ID selected by the user on the series list screen 60, and the lottery box selection screen 81 is generated in accordance with the screen format. A number of object images of lottery boxes to be displayed is set for the screen format of the lottery box selection screen 81.

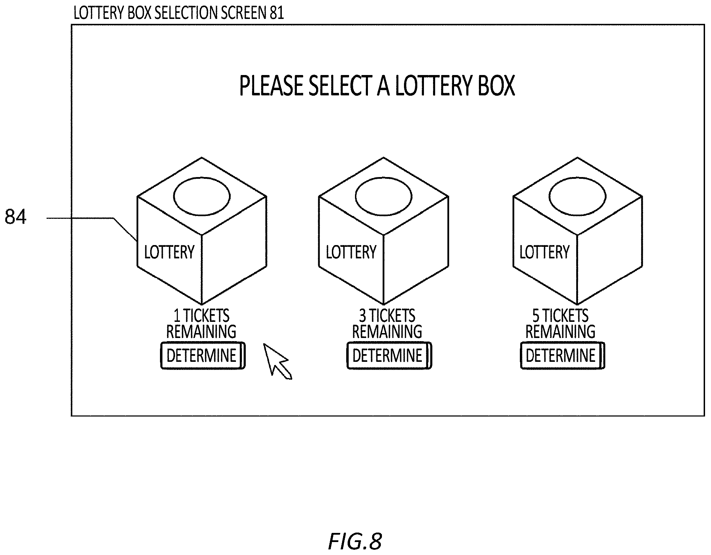

FIG. 8 illustrates an example of the lottery box selection screen 81. As illustrated in FIG. 8, a plurality of object images of lottery boxes are displayed on the lottery box selection screen 81. These lottery boxes illustrate that there are virtual lottery tickets inside. A remaining number of lottery tickets inside the lottery box is displayed near the object image of the lottery box. It should be noted that lottery boxes with remaining lottery tickets may be displayed in color, and lottery boxes without remaining lottery tickets may be displayed in monochrome, so that it is visually understandable that the lottery boxes without remaining lottery tickets cannot be selected. The display control unit 124 displays the lottery box selection screen 81 in a way that the lottery box can be selected only within a predetermined time after the lottery box selection screen 81 is displayed. The display control unit 124 displays a screen for returning to the series list screen 60, superimposed on the lottery box selection screen 81, when the predetermined time has elapsed since the lottery box selection screen 81 was displayed.

The display control unit 124 reads out the inventory availability information for each lottery box from the second item data 115 of the series ID that was selected on the series list screen 60, counts the remaining number, and displays it on the lottery box selection screen 81.

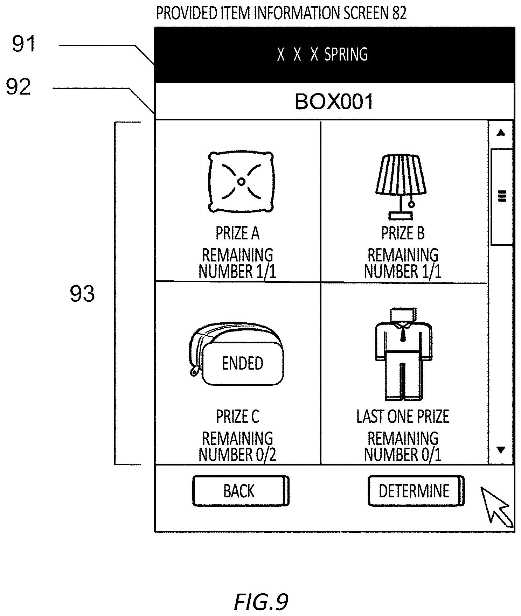

The provided item information screen 82 displays inventory information of provided item information of the lottery box selected on the lottery box selection screen 81. FIG. 9 illustrates an example of the provided item information screen 82. As illustrated in FIG. 9, the provided item information screen 82 displays series name information 91, selected lottery box information 92, and inventory information 93. The display control unit 124 reads out the series name from the series data 113 based on the series ID selected on the series list screen 60, and displays it as the series name information 91. The display control unit 124 displays the lottery box ID of the lottery box selected on the lottery box selection screen 81 as the selected lottery box information 92. Furthermore, the display control unit 124 reads out the item name, item image, prize name, and inventory availability from the second item data 115 of the lottery box ID of the lottery box selected on the lottery box selection screen 81, generates the inventory information 93, and generates the provided item information screen 82.

The lottery ticket selection screen 83 is a screen which is displayed on a condition that the user has determined execution of the lottery box lottery by using the provided item information screen 82, and the number of draws is designated and payment is complete. The user can select the lottery ticket by using the lottery ticket selection screen 83.

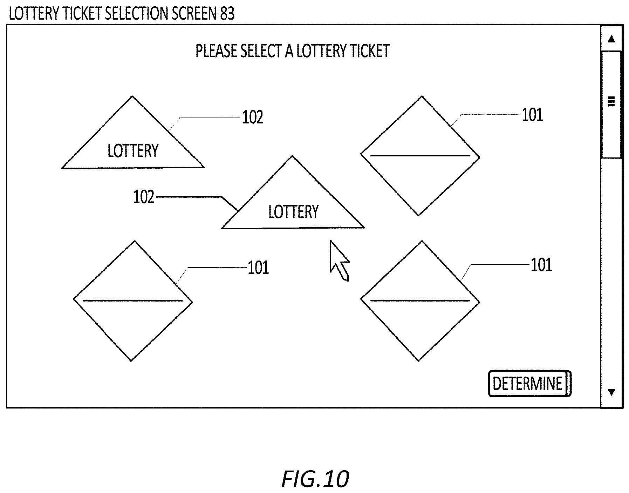

FIG. 10 illustrates an example of the lottery ticket selection screen 83. The lottery ticket selection screen 83 displays object images of virtually expressed lottery tickets in a row, in accordance with the format of the lottery ticket selection screen set for each number of lottery tickets. In the description below, an image of a triangular lottery ticket is used as the object image of the lottery ticket. In the example illustrated in FIG. 10, three opened lottery tickets 101 are displayed as squares (a state where the triangular lottery ticket which was folded in a triangle has been opened), and two unopened lottery tickets 102 are displayed as triangles. When a plurality of unopened lottery tickets are selected, the color in which the selected lottery tickets are displayed may be changed, as long as the unopened lottery tickets, the selected unopened lottery tickets, and the opened lottery tickets are displayed in a way that they can be distinguished from one another.

The display control unit 124 links the individual item ID, which is a lottery result output from the second lottery unit 123, with the object image of the lottery ticket. However, when the individual item ID of the last one prize is included in the lottery result, control of linking the individual item ID of the last one prize with the object image of the lottery ticket that was selected last by the user is performed, and the lottery ticket selection screen 83 is generated.

It should be noted that on the lottery ticket selection screen 83, although the opened lottery ticket 101 is displayed in a way that it cannot be selected, the opened lottery ticket 101 may also be displayed in a form in which it cannot be selected, for example, in monochrome or the like, so that it is visually understandable that it cannot be selected. In addition, the lottery ticket selection screen 83 may display unopened lottery tickets, that is, lottery ticket objects for the number of provided items with inventory, for the lottery box ID selected on the lottery box selection screen 81.

In addition, the display control unit 124 displays the lottery ticket selection screen 83 in a way that the lottery ticket can be selected only within a predetermined time after the lottery ticket selection screen 83 is displayed. The display control unit 124 displays a screen for returning to the lottery box selection screen 81, superimposed on the lottery ticket selection screen 83, when the predetermined time has elapsed since the lottery ticket selection screen 83 was displayed.

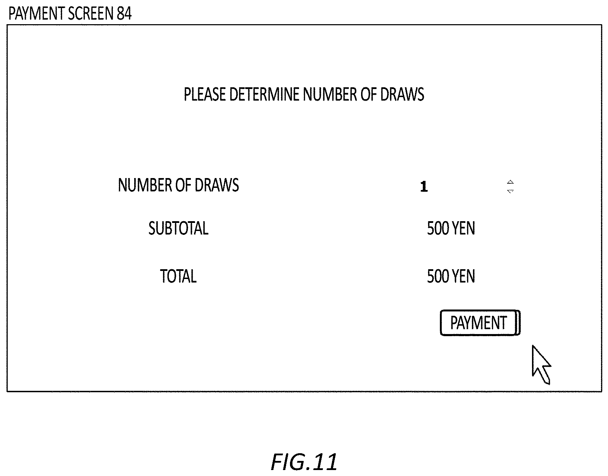

The payment screen 84 is a screen for the user to pay the price. FIG. 11 illustrates an example of the payment screen 84. On the payment screen 84, when payment is confirmed after inputting the number of draws, the price is paid. In the case of the probability lottery, the payment screen 84 is displayed after the probability lottery screen 70 is displayed. In the case of the lottery box lottery, the payment screen 84 is displayed after the lottery ticket selection screen 83 is displayed.

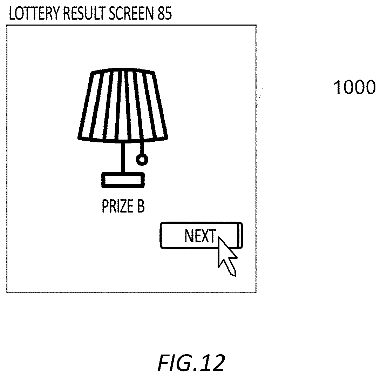

The lottery result screen 85 is a screen for notifying the lottery result to the user. FIG. 12 illustrates an example of the lottery result screen 85. The lottery result screen 85 displays lottery result information 1000. The lottery result information 1000 is configured by the won prize name and its item image. FIG. 12 illustrates an example in which the lottery result is displayed for each draw. The results of multiple draws for the lottery may be displayed in a list. It should be noted that the configuration in which the lottery result information 1000 is displayed for each draw is preferred, since interest in the next lottery result to be displayed is higher, and amusement is increased.

The data update unit 125 updates the inventory availability information of the first item data 114 or the second item data 115 according to the lottery result.

The payment unit 126 executes electronic payment through communication with an external electronic payment server.

### <User terminal 200>

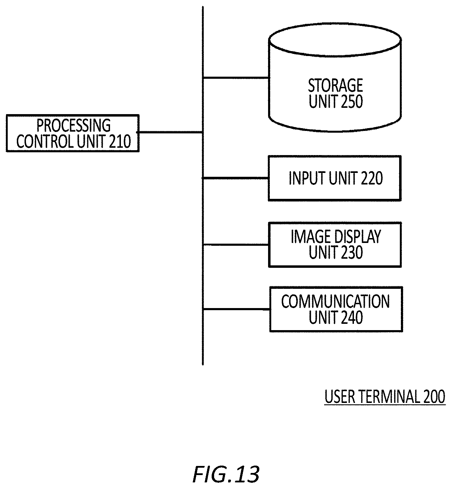

The user terminal 200 is a user terminal manipulated by the user. FIG. 13 is a block diagram illustrating a configuration of the user terminal 200. The user is a buyer who wishes to be provided an item from the provision server 100. The user terminal 200 is, for example, a smartphone, a mobile phone, a personal computer, a tablet terminal, or the like. As illustrated in FIG. 1, basically, there are a plurality of user terminals 200 (user terminal 200_1, 200_2, or the like). In the description below, a configuration in which the user terminal 200 is a smartphone will be described.

The user terminal 200 includes a processing control unit 210, an input unit 220, an image display unit 230, a communication unit 240, and a storage unit 250.

The processing control unit 210 integrally controls operations of the user terminal 200 based on programs and data stored in the storage unit 250, and a manipulation input signal or the like from the input unit 220. Functions of the processing control unit 210 are realized by an electronic component such as a microprocessor such as a CPU or a GPU, an ASIC, or an IC memory.

The processing control unit 210 converts an HTML or the like obtained from the provision server 100 into an interactive document by using a layout engine of a web browser, and displays it on the image display unit 230. When a plug-in compatible with a Flash application or a Java applet is available, it is possible to display and execute these. In addition, the processing control unit 210 performs communication connection and data processing for data communication with the provision server 100 or the like via the communication unit 240.

The input unit 220 is for the user to input various manipulations, and outputs the manipulation input signal to the processing control unit 210 according to the input manipulation. The input unit 220 may be realized, for example, by a keyboard, a mouse, a touch panel, or the like of a personal computer. The input unit 220 may be realized in a tablet terminal, smartphone, or mobile phone by an element that the user directly manipulates with their finger, such as a touch pad, home button, button switch, joystick, or trackball, and also by an element that detects movement and posture, such as an acceleration sensor, angular velocity sensor, tilt sensor, or geomagnetic sensor.

The image display unit 230 displays a screen based on an image signal input from the processing control unit 210. The image display unit 230 is, for example, a display apparatus such as a flat panel display, a cathode ray tube (CRT), a projector, or a head-mounted display.

The communication unit 240 realizes communication by connecting to the communication line N. Functions of the communication unit 240 may be realized, for example, by a wireless communication device, a modem, a TA (terminal adapter), a jack for a wired communication cable, a control circuit, or the like.

Programs for operating the user terminal 200 and realizing various functions that the user terminal 200 has, and data or the like used during execution of these programs are pre-stored or temporarily stored each time processing is performed in the storage unit 250. The storage unit 250 can be realized, for example, by a RAM, a ROM, an IC memory such as a flash memory, a magnetic disk such as a hard disk, an optical disk such as a CD-ROM or a DVD, or the like. Specifically, the storage unit 250 is stored with a system program and a control program for controlling processing of a browser or the like. The system program is a program for realizing basic functions of the user terminal 200 as a computer. The control program is a program for the processing control unit 210 to function as a browser control unit.

### Operations

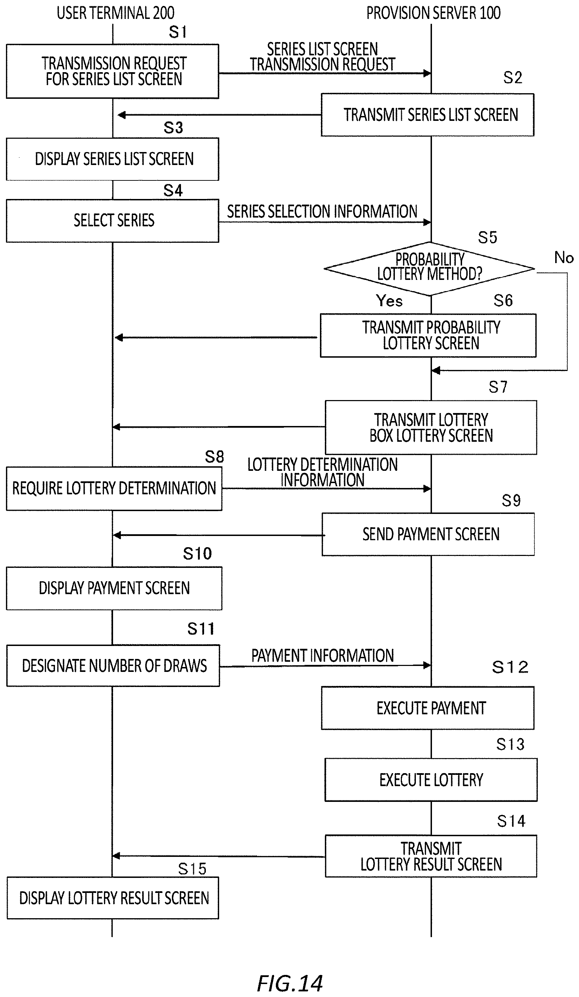

FIG. 14 is a sequence diagram of operations between the provision server 100 and the user terminal 200 in the item providing system 1 of the present embodiment. The operations of the item providing system 1 will be described by using FIG. 14.

### <Operations of the item providing system 1>

When a user accesses the provision server 100 by using the user terminal 200, the processing control unit 210 transmits a transmission request for the series list screen 60 to the provision server 100 (Step S1).

When the provision server 100 receives the transmission request for the series list, the display control unit 124 generates the series list screen 60 and transmits it to the user terminal 200 (Step S2).

When the user terminal 200 receives the series list screen 60, the processing control unit 210 displays the series list screen 60 on the image display unit 230 (Step S3).

When the object image of the series for which the lottery is desired is selected by the user, the processing control unit 210 generates series selection information including the series ID associated with the selected object image and transmits it to the provision server 100 (Step S4).

When the provision server 100 receives the series selection information, the lottery unit 121 checks the lottery method of the series data 113 based on the received series ID (Step S5). When the lottery method is the probability lottery (Step S5: Yes), the display control unit 124 generates the probability lottery screen 70 and transmits it to the user terminal 200 (Step S6). When the lottery method is the lottery box lottery (Step S5: No), the display control unit 124 generates the lottery box lottery screen 80 and transmits it to the user terminal 200 (Step S7).

When a lottery determination is confirmed by the user by using the probability lottery screen 70 or the lottery box lottery screen 80, the processing control unit 210 transmits lottery determination information to the provision server 100 (Step S8).

When the provision server 100 receives the lottery determination information, the display control unit 124 generates the payment screen 84 and transmits it to the user terminal 200 (Step S9).

When the user terminal 200 receives the payment screen 84, the processing control unit 210 displays the payment screen 84 on the image display unit 230 (Step S10).

When the number of draws is designated by the user by using the payment screen 84, the processing control unit 210 generates payment information and transmits it to the provision server 100 (Step S11).

When the provision server 100 receives the payment information, the payment unit 126 executes the payment (Step S12). When the payment is successful, the lottery unit 121 executes the lottery (Step S13). The display control unit 124 generates the lottery result screen 85 based on the lottery result and transmits it to the user terminal 200 (Step S14).

When the user terminal 200 receives the lottery result screen 85, the processing control unit 210 displays the lottery result screen 85 on the image display unit 230 (Step S15).

### <Operations of the provision server 100>

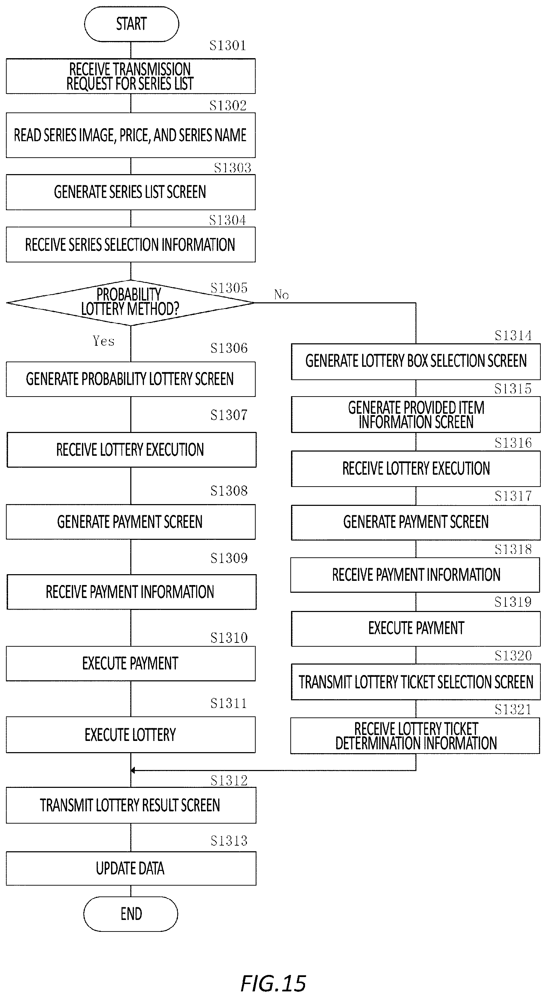

FIG. 15 is a flow diagram of operations of the provision server 100 of the present embodiment. The operations of the provision server 100 will be described by using FIG. 15.

The transmission request for the series list screen 60 transmitted from the user terminal 200 is received via the communication unit 130 (Step S1301).

The display control unit 124 reads the series ID, series name, series image, and price from the series data 113 (Step S1302).

The display control unit 124 associates the series ID and the series image with one another, generates the series list screen 60 by using the series image, price, and series name, and transmits it to the user terminal 200 (Step S1303).

When the series selection information, including the series ID of the series selected by the user by using the series list screen 60, is received from the user terminal 200 via the communication unit 130 (Step S1304), the lottery unit 121 checks whether the lottery method of the series data 113 is the probability lottery based on the series ID of the received series selection information (Step S1305).

When it is the probability lottery (Step S1305: Yes), the display control unit 124 reads out the first item data 114 of the received series ID, generates the probability lottery screen 70, and transmits it to the user terminal 200 (Step S1306).

When the lottery determination information, indicating that the user has determined execution of the probability lottery by using the probability lottery screen 70, is received from the user terminal 200 via the communication unit 130 (Step S1307), the display control unit 124 generates the payment screen 84, and transmits it to the user terminal 200 (Step S1308).

When the payment information including the number of draws designated by the user by using the payment screen 84 is received from the user terminal 200 via the communication unit 130 (Step S1309), the payment unit 126 executes the payment (Step S1310). After payment, the first lottery unit 122 executes the probability lottery by using the individual item IDs of the items with inventory, and outputs the lottery result to the display control unit 124 (Step S1311). The display control unit 124 reads out the item image and prize name from the first item data 114 based on the individual item **ID** of the lottery result, generates the lottery result screen 85, and transmits it to the user terminal 200 (Step S1312).

After transmitting the lottery result screen 85, the data update unit 125 updates the inventory availability of the first item data 114 based on the individual item ID of the lottery result (Step S1313).

When it is not the probability lottery (Step S1305: No), the display control unit 124 reads out a lottery box selection format and the second item data 115 of the received series ID, generates the lottery box selection screen 81, and transmits it to the user terminal 200 (Step S1314).

When the lottery box **ID** that is associated with the lottery box object selected by the user by using the lottery box selection screen 81 is received from the user terminal 200, the item name, item image, prize name, and inventory availability associated with the lottery box ID are read out from the second item data 115, and the inventory information 93 is generated and transmitted to the user terminal 200 as the provided item information screen 82 (Step S1315).

When the lottery determination information, indicating that the user has determined execution of the lottery box lottery by using the provided item information screen 82, is received from the user terminal 200 via the communication unit 130 (Step S1316), the display control unit 124 transmits the payment screen 84 to the user terminal 200 (Step S1317).

When the payment information including the number of draws designated by the user by using the payment screen 84 is received from the user terminal 200 via the communication unit 130 (Step S1318), the payment unit 126 executes the payment (Step S1319). After payment, the second lottery unit 123 performs the lottery by using the individual item IDs of the items with inventory among the provided items associated with the selected lottery box, and the display control unit 124 associates the individual item **ID** output by the second lottery unit 123 with an unopened lottery ticket object, generates the lottery ticket selection screen 83, and transmits it to the user terminal 200 (Step S1320).

When lottery ticket information including the individual item ID associated with the lottery ticket selected by the user by using the lottery ticket selection screen 83 is received from the user terminal 200, the display control unit 124 reads out the item image and prize name from the second item data 115 based on the individual item ID of the lottery result, generates the lottery result screen 85, and transmits it to the user terminal 200 (Step S1321). Then, the process progresses to Step S1313.

### <Operations of the user terminal 200>

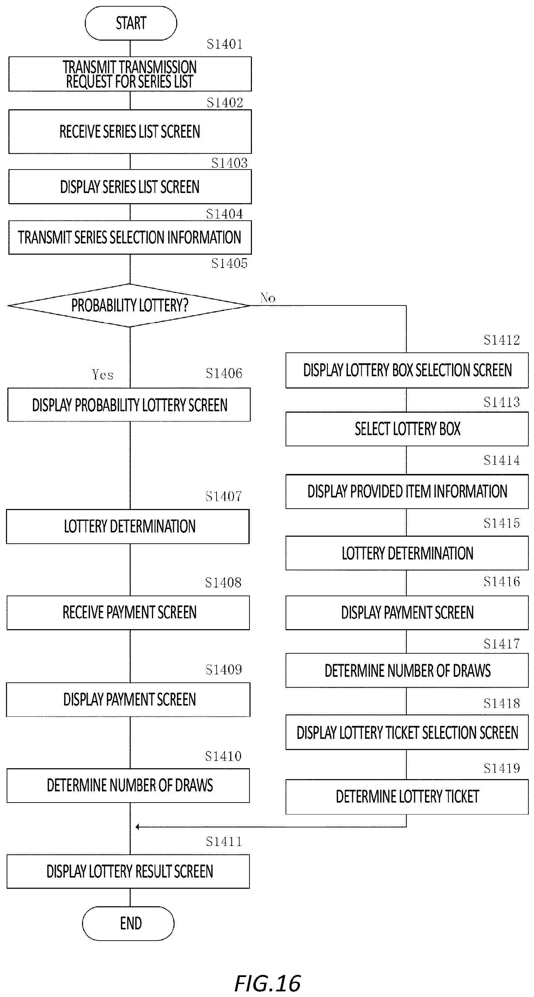

FIG. 16 is a flow diagram of operations of the user terminal 200 of the present embodiment. The operations of the user terminal 200 are described by using FIG. 16.

When the user accesses the provision server 100 by using the user terminal 200, the processing control unit 210 transmits the transmission request for the series list screen 60 to the provision server 100 (Step S1401).

When the series list screen 60 is received from the provision server 100 (Step S1402), the processing control unit 210 displays the series list screen 60 on the image display unit 230 (Step S1403).

When the series for which the lottery is desired is selected by the user, the processing control unit 210 generates the series selection information including the series ID of the selected series, and transmits it to the provision server 100 (Step S1404).

When the lottery method of the series selected by the user is the probability lottery (Step S1405: Yes), the probability lottery screen 70 is received from the provision server 100, and the processing control unit 210 displays it on the image display unit 230 (Step S1406).

When the user determines execution of the probability lottery by using the probability lottery screen 70, the processing control unit 210 generates the lottery determination information, and transmits it to the provision server 100 (Step S1407).

When the payment screen 84 is received from the provision server 100 (Step S1408), the processing control unit 210 displays the payment screen 84 on the image display unit 230 (Step S1409).

When the user determines the number of draws by using the payment screen 84, the processing control unit 210 transmits the payment information including the number of draws to the provision server 100 (Step S1410). When the lottery result screen 85 is received from the provision server 100, the processing control unit 210 displays the lottery result screen 85 on the image display unit 230 (Step S1411).

When the lottery method of the series selected by the user is the lottery box lottery (Step S1405: No), the lottery box selection screen 81 is received from the provision server 100, and the processing control unit 210 displays it on the image display unit 230 (Step S1412).

When the user selects the lottery box by using the lottery box selection screen 81, the ID of the lottery box is transmitted to the provision server 100 (Step S1413).

When the provided item information screen 82 transmitted from the provision server 100 is received, the processing control unit 210 displays it on the image display unit 230 (Step S1414).

When the user executes the lottery determination by using the provided item information screen 82, the lottery determination information is transmitted to the provision server 100 (Step S1415). When the payment screen 84 transmitted from the provision server 100 is received, the processing control unit 210 displays it on the image display unit 230 (Step S1416).

When the user determines the number of draws by using the payment screen 84, the processing control unit 210 transmits the payment information including the number of draws to the provision server 100 (Step S1417). When the lottery ticket selection screen 83 is received, the processing control unit 210 displays it on the image display unit 230 (Step S1418). When the user selects the lottery ticket by using the lottery ticket selection screen 83, the individual item ID associated with the selected lottery ticket is transmitted to the provision server 100 (Step S1419). Then, the process progresses to Step S1411, and the processing control unit 210 displays the lottery result screen 85 on the image display unit 230.

According to the present invention, amusement of the user in obtaining the provided items increases, since the lottery method is different depending on the series.

### Second embodiment

In the present embodiment, a provision method of provided items will be described. It should be noted that configurations similar to those of the above-described embodiment are given the same reference numbers, and detailed descriptions thereof will be omitted.

Items that are won in the above-described embodiment may be delivered to the user in the order in which they were won (at the end of the lottery), or the lottery may be executed in advance, and the items may be delivered to the user after a predetermined period of time has passed.

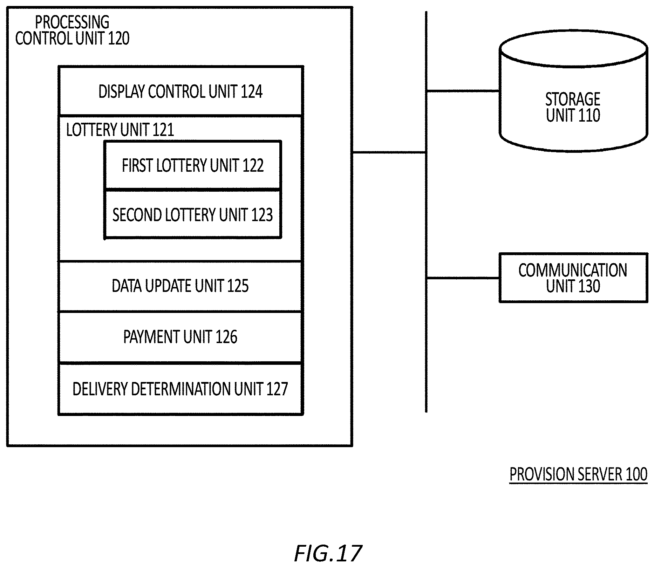

FIG. 17 is a block diagram of the provision server 100 of the present embodiment. In the present embodiment, the provision server 100 has a delivery determination unit 127.

The delivery determination unit 127 checks the sales period of the series data 113, and when the lottery date is within the sales period, determines delivery of the provided item to the user on a condition that the lottery has ended. When the lottery date is before the sales period, the delivery determination unit 127 receives the item as a preordered prize, and determines the delivery of the preordered prize on a condition that the sales date has passed.

According to this configuration, amusement of the user in obtaining the provided items increases, since the lottery method and delivery period is different depending on the series.

### Third embodiment

The same number of provided items as the number of draws were provided in the above-described embodiments. In the present embodiment, a configuration in which another item is further won after the lottery will be described. It should be noted that configurations similar to those of the above-described embodiment are given the same reference numbers, and detailed descriptions thereof will be omitted.

After execution of the lottery, the first lottery unit 122 or the second lottery unit 123 executes a lottery of whether or not a provided item will further be provided. The item provided at this time may be specially prepared as a double chance prize, or may be selected by the user from the items with inventory.

According to this configuration, amusement of the user in obtaining the provided items increases, since there is a possibility that a number of provided items that is more than the number of draws can be obtained.

Although in the above-described first and second embodiments, the lottery method was set for each series, the lottery method may be set depending on the sales period. As an example, different lottery methods may be set for series before their sales period and series during their sales period. In addition, for one series, the probability lottery method may be set before the sales period, and the lottery box lottery method may be set once the sales period begins.

In addition, although generation of a browser-based screen was described in the above-described embodiments, it may be application-based.

The present invention has been described above by presenting embodiments, but it is not necessary to have the configurations of all of the embodiments, and they can be combined and implemented as appropriate, and the present invention is not necessarily limited to the above-described embodiments, and can be modified and implemented in various ways within the scope of its technical concept.

In addition, some or all of the above-described embodiments may also be described as in the notes below, but are not limited to these.
Note 1
   An item providing system, including:
   a display control means which displays a first object image associated with each series to which items belong; and
   a lottery means which performs a lottery by a first lottery method or a second lottery method which is set for the series associated with the first object image that was selected, wherein
   the display control means
   displays, on a condition that the first object image of the series to which the first lottery method is set was selected, a first lottery screen on which a number of draws can be designated, and
   displays, on a condition that the first object image of the series to which the second lottery method is set was selected, a second lottery screen on which any of a plurality of second object images, which are each linked with an item group into which the items have been grouped, can be selected.
Note 2
   The item providing system according to note 1, wherein
   the display control means displays the first lottery screen after displaying a winning probability of each item of the same series.
Note 3
   The item providing system according to note 1 or 2, wherein
   the display control means displays, in a distinguishable manner, the second object image which is linked with the item group including items with inventory among the items, and the second object image which is linked with the item group including items without inventory among the items.
Note 4
   The item providing system according to any one of notes 1 to 3, wherein
   the display control means displays the second object image which is linked with the item group of items without inventory in a way that the second object image cannot be selected.
Note 5
   The item providing system according to any one of notes 1 to 4, wherein
   the display control means displays, after displaying the second lottery screen, item images of items which can be won by the second lottery method.
Note 6
   The item providing system according to any one of notes 1 to 5, wherein
   the display control means displays information relating to a prize name set for each of the items and information relating to each of the items before displaying the first lottery screen or the second lottery screen.
Note 7
   The item providing system according to any one of notes 1 to 6, wherein
   the lottery means presets an item to be won last for each series or each item group.
Note 8
   The item providing system according to any one of notes 1 to 7, wherein
   the display control means displays the second object image in a way that the second object image can be selected within a predetermined time after the second lottery screen is displayed.
Note 9
   The item providing system according to any one of notes 1 to 8, wherein
   the display control means displays, near the second object image on the second lottery screen, inventory information of the item group linked to the second object image.
Note 10
   The item providing system according to any one of notes 1 to 9, wherein
   the display control means displays, on a condition that the second object image was selected, third object images for a number of items linked to the second object image in a way that items linked to the second object image cannot be identified.
Note 11
   A program causing a computer to function as:
   a display control means which displays a first object image associated with each series to which items belong; and
   a lottery means which performs a lottery by a first lottery method or a second lottery method which is set for the series associated with the first object image that was selected, wherein
   the display control means
   displays, on a condition that the first object image of the series to which the first lottery method is set was selected, a first lottery screen on which a number of draws can be designated, and
   displays, on a condition that the first object image of the series to which the second lottery method is set was selected, a second lottery screen on which any of a plurality of second object images, which are each linked with an item group into which the items have been grouped, can be selected.
Note 12
   An item providing apparatus, including:
   a display control means which displays a first object image associated with each series to which items belong; and
   a lottery means which performs a lottery by a first lottery method or a second lottery method which is set for the series associated with the first object image that was selected, wherein
   the display control means
   displays, on a condition that the first object image of the series to which the first lottery method is set was selected, a first lottery screen on which a number of draws can be designated, and
   displays, on a condition that the first object image of the series to which the second lottery method is set was selected, a second lottery screen on which any of a plurality of second object images, which are each linked with an item group into which the items have been grouped, can be selected.

### EXPLANATION OF REFERENCES

100 provision server; 110 storage unit; 120 processing control unit; 121 lottery unit; 122 first lottery unit; 123 second lottery unit; 124 display control unit; 125 data update unit; 126 payment unit; 130 communication unit; 200 user terminal.

## Claims

1. An item providing system, comprising:
a display control means which displays a first object image associated with each series to which items belong; and
a lottery means which performs a lottery by a first lottery method or a second lottery method which is set for the series associated with the first object image that was selected, wherein
the display control means
displays, on a condition that the first object image of the series to which the first lottery method is set was selected, a first lottery screen on which a number of draws can be designated, and
displays, on a condition that the first object image of the series to which the second lottery method is set was selected, a second lottery screen on which any of a plurality of second object images, which are each linked with an item group into which the items have been grouped, can be selected.

2. The item providing system according to claim 1, wherein
the display control means displays the first lottery screen after displaying a winning probability of each item of identical series.

3. The item providing system according to claim 1 or 2, wherein
the display control means displays, in a distinguishable manner, the second object image which is linked with the item group including items with inventory among the items, and the second object image which is linked with the item group including items without inventory among the items.

4. The item providing system according to claim 3, wherein
the display control means displays the second object image which is linked with the item group of items without inventory in a way that the second object image cannot be selected.

5. The item providing system according to claim 1 or 2, wherein
the display control means displays, after displaying the second lottery screen, item images of items which can be won by the second lottery method.

6. The item providing system according to claim 1 or 2, wherein
the display control means displays information relating to a prize name set for each of the items and information relating to each of the items before displaying the first lottery screen or the second lottery screen.

7. The item providing system according to claim 1 or 2, wherein
the lottery means presets an item to be won last for each series or each item group.

8. The item providing system according to claim 1 or 2, wherein
the display control means displays the second object image in a way that the second object image can be selected within a predetermined time after the second lottery screen is displayed.

9. The item providing system according to claim 1 or 2, wherein
the display control means displays, near the second object image on the second lottery screen, inventory information of the item group linked to the second object image.

10. The item providing system according to claim 1, wherein
the display control means displays, on a condition that the second object image was selected, third object images for a number of items linked to the second object image in a way that items linked to the second object image cannot be identified.

11. A program causing a computer to function as:
a display control means which displays a first object image associated with each series to which items belong; and
a lottery means which performs a lottery by a first lottery method or a second lottery method which is set for the series associated with the first object image that was selected, wherein
the display control means
displays, on a condition that the first object image of the series to which the first lottery method is set was selected, a first lottery screen on which a number of draws can be designated, and
displays, on a condition that the first object image of the series to which the second lottery method is set was selected, a second lottery screen on which any of a plurality of second object images, which are each linked with an item group into which the items have been grouped, can be selected.

12. An item providing apparatus, comprising:
a display control means which displays a first object image associated with each series to which items belong; and
a lottery means which performs a lottery by a first lottery method or a second lottery method which is set for the series associated with the first object image that was selected, wherein
the display control means
displays, on a condition that the first object image of the series to which the first lottery method is set was selected, a first lottery screen on which a number of draws can be designated, and
displays, on a condition that the first object image of the series to which the second lottery method is set was selected, a second lottery screen on which any of a plurality of second object images, which are each linked with an item group into which the items have been grouped, can be selected.
